# EUROPEAN PATENT APPLICATION

(11) **EP 4 224 343 A1**
(43) Date of publication of application: **09.08.2023**
(21) Application number: 20956334.5
(22) Date of filing: 02.10.2020
(51) Int. Cl.: G06F 21/31

(54) **CONTROL METHOD, INFORMATION PROCESSING DEVICE, INFORMATION PROCESSING SYSTEM, AND CONTROL PROGRAM**

(71) Applicant: FUJITSU LIMITED, Kawasaki-shi, Kanagawa 211-8588 (JP)
(72) Inventor: YASAKI, Koichi, Kawasaki-shi, Kanagawa 211-8588 (JP); YAMAMOTO, Dai, Kawasaki-shi, Kanagawa 211-8588 (JP); NAKAMURA, Yosuke, Kawasaki-shi, Kanagawa 211-8588 (JP); TSUNODA, Tadanobu, Kawasaki-shi, Kanagawa 211-8588 (JP); KOJIMA, Rikuhiro, Kawasaki-shi, Kanagawa 211-8588 (JP); NIMURA, Kazuaki, Kawasaki-shi, Kanagawa 211-8588 (JP)
(74) Representative: Hoffmann Eitle
(86) International application number: PCT/JP2020/037551
(87) International publication number: WO 2022/070406

(57) **Abstract**

A computer receives, from a user, a usage instruction that instructs to use a first service, and notifies first processing for providing the first service of identification information of a second service to which the user is logged in when the usage instruction is received. The computer receives a condition from the first processing according to the notification of the identification information and instructs second processing for providing the second service to notify the first processing of information according to the condition.

## Description

### FIELD

The present disclosure relates to a control technology.

### BACKGROUND

In recent years, data free flow with trust (DFFT) for realizing Society 5.0 has been proposed, large data such as payment information or personal information has been organized to be distributed online. A threat for online distribution is spoofing of a data transmission source (for example, refer to Non-Patent Document 1). The data transmission source is, for example, a person, an organization, or things such as an Internet of Things (IoT) device. In order to realize the Society 5.0, it is important to be able to confirm validity of the transmission source, connected online, online.

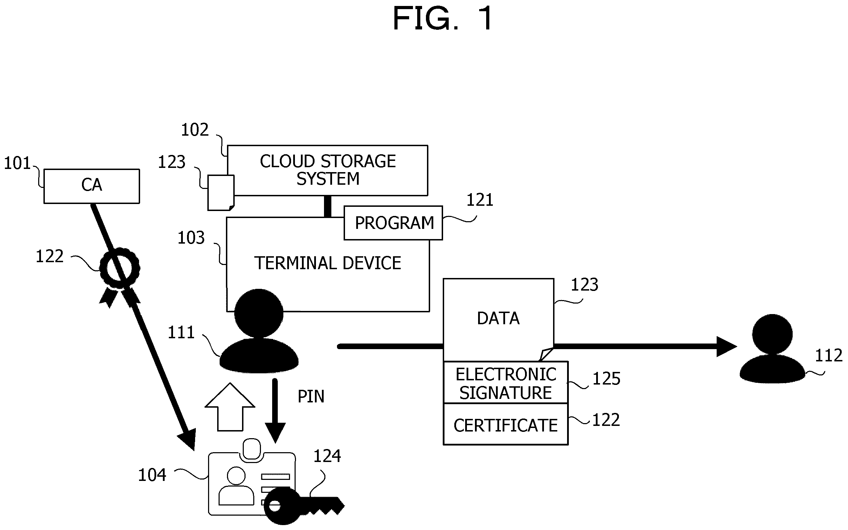

FIG. 1 illustrates an example of an electronic signature system used to ensure the validity of the transmission source. A certification authority (CA) 101 audits a sender 111 who is the transmission source, and issues a certificate 122 including sender information and a public key and an integrated circuit (IC) card 104 that stores a private key 124. As the sender information, for example, a name or an e-mail address of the sender 111 is used.

The sender 111 acquires data 123 to be transmitted from a cloud storage system 102 using a terminal device 103, inserts the IC card 104 into the terminal device 103, and inputs a personal identification number (PIN).

A plug-in program 121 that operates in the terminal device 103 generates an electronic signature 125 by encrypting a hash value of the data 123 using the private key 124 in the IC card 104. Then, the terminal device 103 transmits the data 123, the electronic signature 125, and the certificate 122 to a terminal device of a recipient 112.

The terminal device of the recipient 112 verifies the electronic signature 125 with the public key included in the certificate 122 and compares the sender information included in the certificate 122 with the sender information included in the data 123 so as to check the validity of the sender 111.

In the electronic signature system in FIG. 1, the CA 101 associates the sender 111, the public key, and the private key with certificate 122 and the sender 111 executes encryption processing on the data 123 using the private key, so that the validity of the transmission source is ensured.

However, for the sender 111, each time when generating the electronic signature for the data, a work for inserting the IC card 104 into the terminal device 103 and inputting the PIN is caused. When the number of pieces of data to be transmitted increases, a work amount increases in proportion to the number of pieces of data. Therefore, a load of the sender 111 increases. Therefore, the electronic signature system is suitable for an application such as a signature for a contract. However, in a case where the electronic signature system is applied to guarantee transmission sources of various types of business data, convenience of the electronic signature system is lowered.

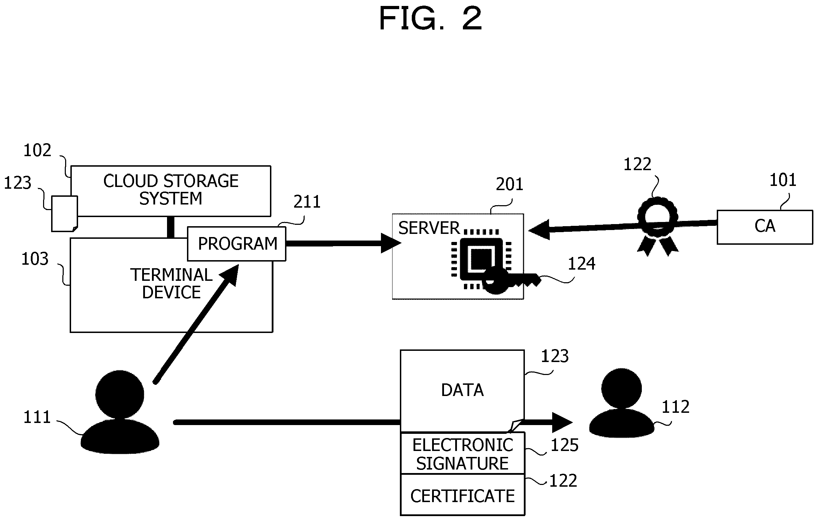

FIG. 2 illustrates an example of a remote signature system in which a server on a cloud generates an electronic signature. In the remote signature system, a server 201 that provides an electronic signature service is provided on the cloud, and the CA 101 issues the certificate 122 and the private key 124 for the server 201.

The sender 111 acquires the data 123 from the cloud storage system 102, using the terminal device 103. The plug-in program 211 that operates in the terminal device 103 transmits the data 123 to the server 201.

When the terminal device 103 transmits the data 123, the server 201 performs identity authentication of the sender 111, using a user ID, a password, or the like. As a result, appropriate access limitation is imposed, and only the sender 111 indicated by the certificate 122 can use the electronic signature service.

A hardware secure module (HSM) in the server 201 generates the electronic signature 125 for the data 123 using the private key 124, and the server 201 transmits the electronic signature 125 to the terminal device 103. Then, the terminal device 103 transmits the data 123, the electronic signature 125, and the certificate 122 to a terminal device of a recipient 112.

According to the remote signature system in FIG. 2, since the sender 111 does not need to insert the IC card 104 into the terminal device 103, the load of the sender 111 is reduced.

In relation to the identity authentication, an authentication system has been known that does not need to input knowledge authentication information, possession authentication information, and biometric authentication information other than identification information such as a user ID or a card ID (for example, refer to Patent Document 1).

### SUMMARY

### TECHNICAL PROBLEM

In the remote signature system in FIG. 2, the server 201 exists on the cloud. Therefore, a risk of an attack on the server 201 by an attacker constantly exists. The attack on the server 201 means an unauthorized access to the private key 124 in the server 201.

In order to prevent such an unauthorized access, it is desirable to strengthen the identity authentication of the sender 111 with a multifactor authentication technology such as a short message service (SMS)/a fast identity online (FIDO). However, in a case where the multifactor authentication technology is used, since information to be operated by the sender 111 for identity authentication increases, the load of the sender 111 increases.

Note that this problem is caused not only in the remote signature system for providing the electronic signature service but also in an information processing system for providing various services.

In one aspect, an object of the present disclosure is to reduce an operation load for authentication of a user who uses a service.

### SOLUTION TO PROBLEM

In one proposal, a computer receives, from a user, a usage instruction that instructs to use a first service and notifies first processing for providing the first service of identification information of a second service to which the user is logged in when the usage instruction is received. The computer receives a condition from the first processing according to the notification of the identification information and instructs second processing for providing the second service to notify the first processing of information according to the condition.

### ADVANTAGEOUS EFFECTS OF INVENTION

According to one aspect, it is possible to reduce an operation load for authentication of a user who uses a service.

### BRIEF DESCRIPTION OF DRAWINGS

FIG. 1 is a diagram illustrating an electronic signature system;
FIG. 2 is a diagram illustrating a remote signature system;
FIG. 3 is a diagram illustrating a remote signature system to which a multifactor authentication technology is applied;
FIG. 4 is a functional configuration diagram of an information processing device;
FIG. 5 is a flowchart of control processing;
FIG. 6 is a configuration diagram of an information processing system;
FIG. 7 is a functional configuration diagram of a terminal device;
FIG. 8 is a functional configuration diagram of a cloud storage system;
FIG. 9 is a functional configuration diagram of a server;
FIG. 10 is a diagram illustrating a database;
FIG. 11A is a diagram (part 1) illustrating a sequence of information processing;
FIG. 11B is a diagram (part 2) illustrating the sequence of the information processing;
FIG. 12 is a diagram illustrating a browser screen;
FIG. 13A is a flowchart (part 1) of control processing executed by the terminal device;
FIG. 13B is a flowchart (part 2) of the control processing executed by the terminal device;
FIG. 13C is a flowchart (part 3) of the control processing executed by the terminal device;
FIG. 14A is a flowchart (part 1) of control processing executed by the server;
FIG. 14B is a flowchart (part 2) of the control processing executed by the server;
FIG. 14C is a flowchart (part 3) of the control processing executed by the server;
FIG. 14D is a flowchart (part 4) of the control processing executed by the server;
FIG. 15 is a flowchart of electronic signature control processing;
FIG. 16 is a configuration diagram of an information processing system including two servers; and
FIG. 17 is a hardware configuration diagram of the information processing device.

### DESCRIPTION OF EMBODIMENTS

Hereinafter, an embodiment will be described in detail with reference to the drawings.

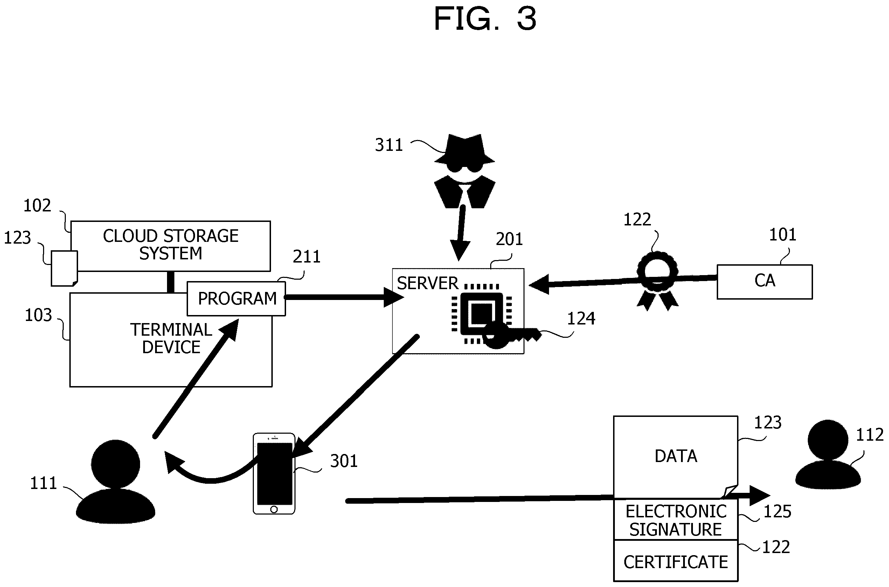

FIG. 3 illustrates an example of a remote signature system in which a multifactor authentication technology is applied to a remote signature system in FIG. 2. In the remote signature system in FIG. 3, a server 201 performs two-step identity authentication for a sender 111 in order to avoid an attack by an attacker 311.

When a terminal device 103 transmits data 123 to the server 201, the server 201 performs first identity authentication using a user ID, a password, or the like. In a case where validity of the sender 111 is confirmed through the first identity authentication, the server 201 notifies a mobile terminal device 301 of the sender 111 of a one-time password with a short message or an e-mail.

The sender 111 inputs the notified one-time password to the terminal device 103, and a program 211 transmits the one-time password to the server 201. The server 201 performs second identity authentication with the received one-time password. In a case where the validity of the sender 111 is confirmed through the second identity authentication, the server 201 receives the data 123 and generates an electronic signature 125 for the data 123.

According to the remote signature system in FIG. 3, since the identity authentication of the sender 111 is strengthened, a risk of attacks on the server 201 is reduced. However, since multifactor authentication is performed with no relation to a working status of the sender 111, an additional work for operating information for the multifactor authentication is caused. As the identity authentication is more strengthened, information to be operated by the sender 111 increases each time when using the electronic signature service. Therefore, a load of the sender 111 increases. Therefore, the remote signature system using the multifactor authentication technology such as the SMS is not suitable for an application for guaranteeing a transmission source of business data.

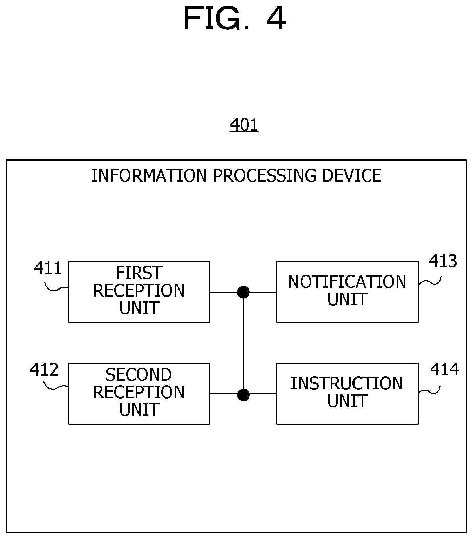

FIG. 4 illustrates a functional configuration example of an information processing device (computer) according to the embodiment. An information processing device 401 in FIG. 4 includes a first reception unit 411, a second reception unit 412, a notification unit 413, and an instruction unit 414.

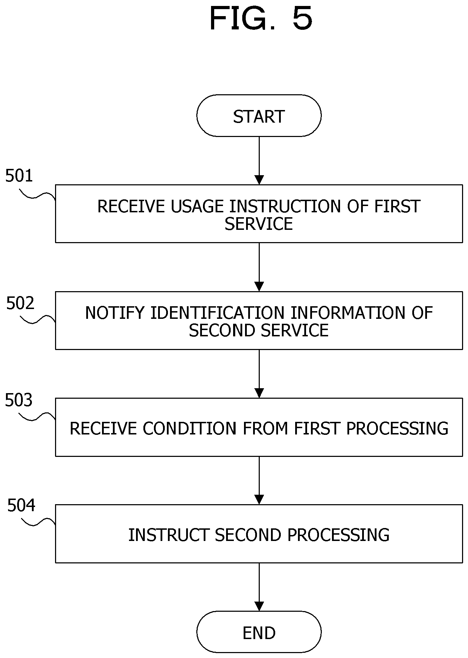

FIG. 5 is a flowchart illustrating an example of control processing executed by the information processing device 401 in FIG. 4. First, the first reception unit 411 receives, from a user, a usage instruction for instructing to use a first service (step 501). Next, the notification unit 413 notifies first processing for providing the first service of identification information of a second service to which the user is logged in when receiving the usage instruction (step 502).

Next, the second reception unit 412 receives a condition from the first processing according to the notification of the identification information (step 503). Then, the instruction unit 414 instructs second processing for providing the second service to notify the first processing of information according to the condition (step 504).

According to the information processing device 401 in FIG. 4, it is possible to reduce an operation load for authentication of a user who uses a service.

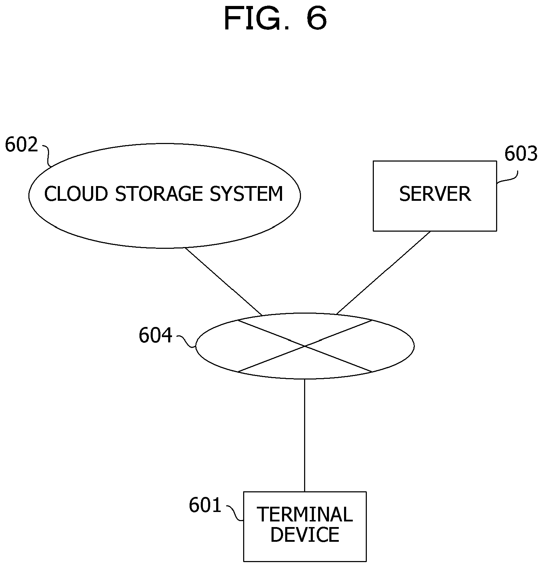

FIG. 6 illustrates a configuration example of an information processing system including the information processing device 401 in FIG. 4. The information processing system in FIG. 6 is a remote signature system and includes a terminal device 601, a cloud storage system 602, and a server 603. The terminal device 601 corresponds to the information processing device 401 in FIG. 4.

The server 603 provides an electronic signature service to the terminal device 601. The electronic signature service is a service for generating an electronic signature of a user for data. The cloud storage system 602 provides a data storage service to the terminal device 601. The data storage service is a service for storing data. The data to be stored may be a document created by a user.

The electronic signature service is an example of the first service, and the data storage service is an example of the second service. The server 603 is an example of a first device that provides the first service.

The terminal device 601, the cloud storage system 602, and the server 603 communicate with each other via a communication network 604. The communication network 604 is, for example, a wide area network (WAN).

A user of the electronic signature service and the data storage service corresponds to, for example, the sender 111 of the remote signature system in FIG. 2. The user acquires a document to be processed from the cloud storage system 602 using the terminal device 601, and the terminal device 601 transmits the document to be processed to the server 603. The server 603 generates an electronic signature for the document using a private key of the user and transmits the generated electronic signature to the terminal device 601.

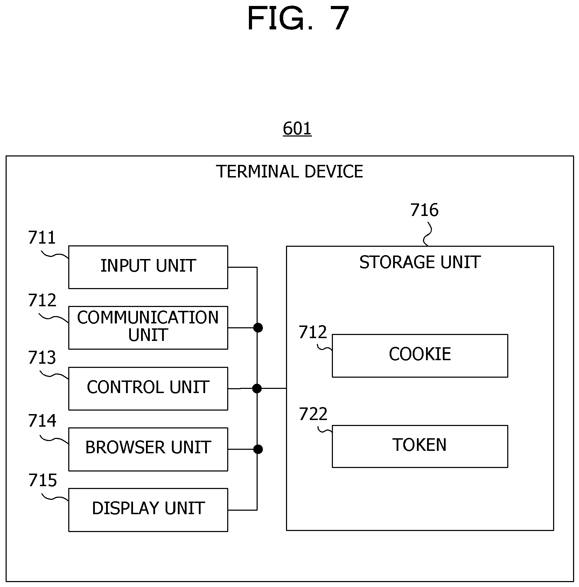

FIG. 7 is a functional configuration example of the terminal device 601 in FIG. 6. The terminal device 601 in FIG. 7 includes an input unit 711, a communication unit 712, a control unit 713, a browser unit 714, a display unit 715, and a storage unit 716. The input unit 711 and the communication unit 712 respectively correspond to the first reception unit 411 and the second reception unit 412 in FIG. 4. The control unit 713 corresponds to the notification unit 413 and the instruction unit 414 in FIG. 4.

The input unit 711 receives an instruction from a user. The browser unit 714 generates a browser screen by executing a browser program, and the display unit 715 displays the browser screen. The control unit 713 executes control processing for identity authentication of the user by executing an agent program. The agent program is, for example, a plug-in of the browser program.

When the server 603 registers the user in the electronic signature service, the communication unit 712 receives a cookie 721 from the server 603, and the storage unit 716 stores the cookie 721. The control unit 713 requests the server 603 to use the private key of the user, using the cookie 721.

In a case where the usage of the private key is permitted by the server 603, the communication unit 712 receives a token 722 from the server 603, and the storage unit 716 stores the token 722. The token 722 is an example of first usage permission information used to permit usage of the first service. The control unit 713 operates as a usage processing unit that uses the first service and uses the electronic signature service using the token 722.

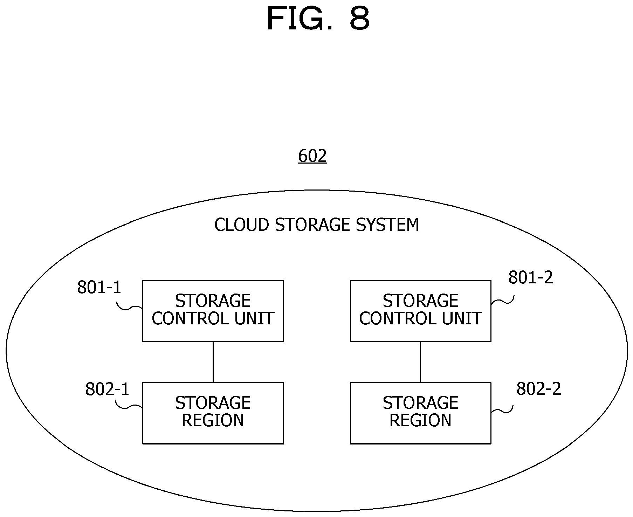

FIG. 8 illustrates a functional configuration example of the cloud storage system 602 in FIG. 6. The cloud storage system 602 in FIG. 8 includes a storage control unit 801-1, a storage control unit 801-2, a storage region 802-1, and a storage region 802-2.

The storage region 802-1 is a region allocated to the user, and the storage region 802-2 is a region allocated to the electronic signature service. The storage control unit 801-1 executes management processing for managing data stored in the storage region 802-1, and the storage control unit 801-2 executes management processing for managing data stored in the storage region 802-2. The management processing executed by the storage control unit 801-1 is an example of the second processing.

The storage control unit 801-1, the storage control unit 801-2, the storage region 802-1, and the storage region 802-2 may be included in a single server on the cloud. Alternatively, the storage control unit 801-1 and the storage region 802-1 may be included in a single server, and the storage control unit 801-2 and the storage region 802-2 may be included in another server. The server including the storage control unit 801-1 and the storage region 802-1 is an example of a second device that provides the second service.

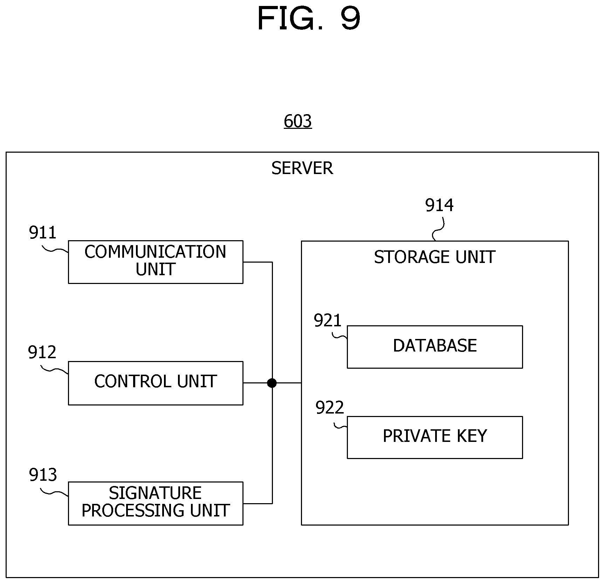

FIG. 9 illustrates a functional configuration example of the server 603 in FIG. 6. The server 603 in FIG. 9 includes a communication unit 911, a control unit 912, a signature processing unit 913, and a storage unit 914.

The storage unit 914 stores a database 921 and a private key 922. The database 921 includes information used to manage a user of the electronic signature service. The private key 922 is a private key of the user.

The signature processing unit 913 executes signature processing for generating an electronic signature for a document using the private key 922, by executing a signature program. The control unit 912 executes control processing for user's identity authentication using the database 921, by executing a management program. The management program is, for example, a plug-in of the signature program, and the signature processing executed by the signature processing unit 913 and the control processing executed by the control unit 912 are examples of the first processing.

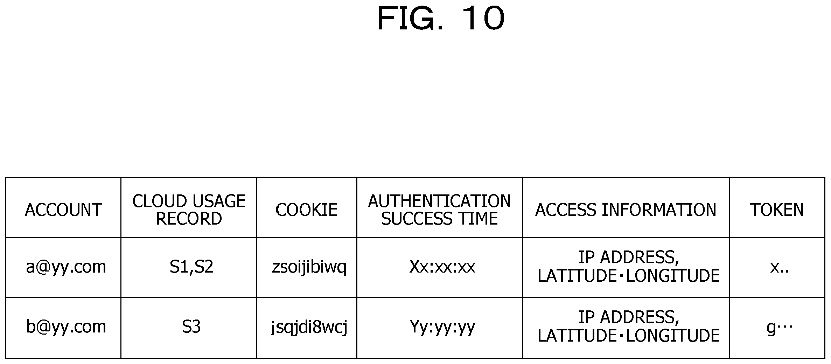

FIG. 10 illustrates an example of the database 921 in FIG. 9. The database 921 in FIG. 10 includes an account, a cloud usage record, a cookie, an authentication success time, access information, and a token of each user.

The account represents a user account of the electronic signature service, and the cloud usage record represents identification information of the data storage service used by the user. For example, a cloud usage record of a user who has an account "a@yy.com" is "S1, S2", and a cloud usage record of a user who has an account "b@yy.com" is "S3". S1, S2, and S3 are the identification information of the data storage service.

The cookie represents the cookie 721 transmitted to the terminal device 601, and the authentication success time represents a time of the last token authentication success. The access information represents an IP address of the terminal device 601 and a latitude and a longitude of the terminal device 601 at the time of the latest token authentication success, and the token represents the token 722 transmitted to the terminal device 601.

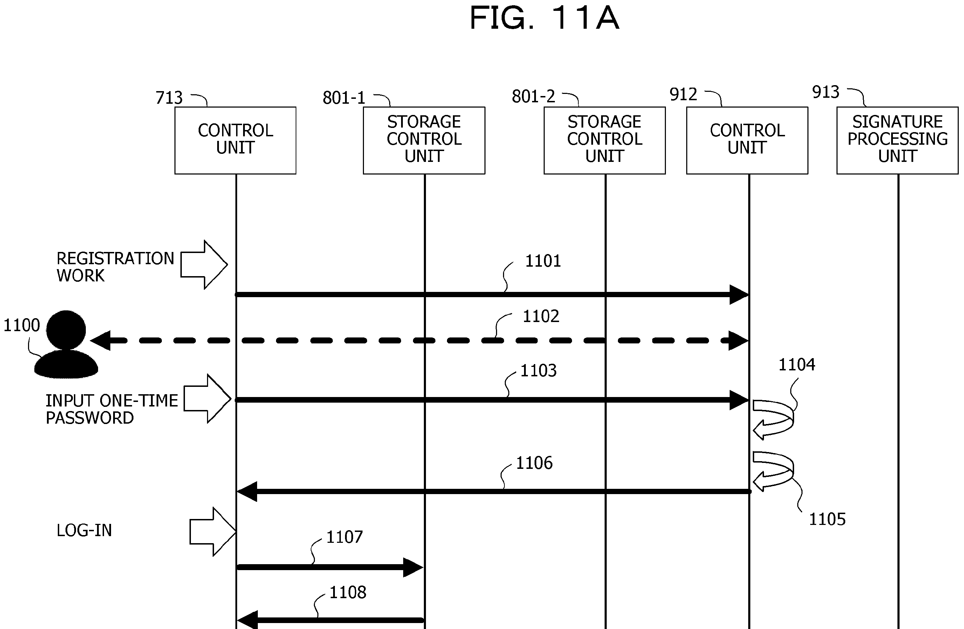

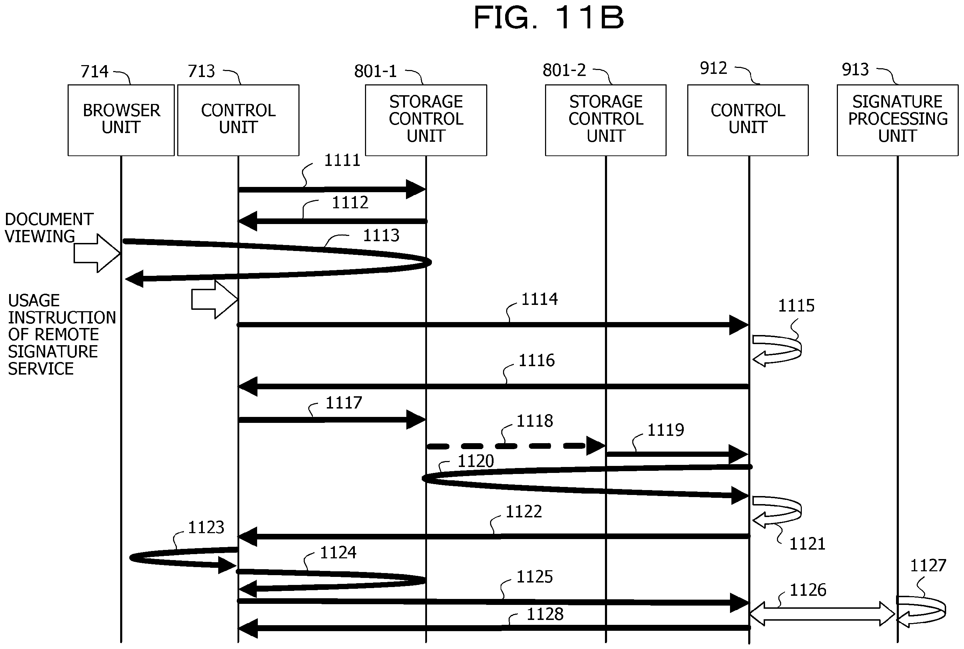

FIGs. 11A and 11B are examples of a sequence of information processing executed by the information processing system in FIG. 6. In this information processing, the server 603 performs two-step identity authentication for a user 1100 of the terminal device 601.

First, the user 1100 performs a registration work, and the control unit 713 of the terminal device 601 transmits a registration request to the server 603 via the communication unit 712 (procedure 1101). The registration request includes a user account of the user 1100.

The control unit 912 of the server 603 notifies a mobile terminal device of the user 1100 of a one-time password using a short message or an e-mail, in response to the received registration request (procedure 1102).

The user 1100 inputs the notified one-time password to the terminal device 601, and the input unit 711 receives the input one-time password. The control unit 713 transmits a one-time password verification request to the server 603, via the communication unit 712 (procedure 1103). The one-time password verification request includes the input one-time password and identification information of one or more data storage services used by the user 1100.

The control unit 912 verifies the one-time password included in the received one-time password verification request. In a case where the one-time password is correct, the control unit 912 selects a data storage service used for identity authentication, from among the data storage services included in the one-time password verification request (procedure 1104). For example, the control unit 912 selects a data storage service with higher security as the data storage service used for the identity authentication.

Next, the control unit 912 generates the cookie 721 (procedure 1105) and transmits the cookie 721 to the terminal device 601 via the communication unit 911 (procedure 1106).

Next, the user 1100 inputs a user ID and a password of the data storage service to the terminal device 601 in order to log in the data storage service of the cloud storage system 602. The input unit 711 receives the input user ID and password. The control unit 713 transmits an authorization request to the cloud storage system 602 via the communication unit 712 (procedure 1107). The authorization request includes the input user ID and password.

The storage control unit 801-1 of the cloud storage system 602 transmits a token that permits to use the data storage service to the terminal device 601, in response to the received authorization request (procedure 1108). As a result, the login to the data storage service is completed, and the terminal device 601 enters a login state. The token that permits to use the data storage service is an example of second usage permission information used to permit usage of the second service.

Thereafter, the control unit 713 transmits the authorization request including the old token received from the storage control unit 801-1 to the cloud storage system 602, via the communication unit 712 (procedure 1111). The storage control unit 801-1 transmits a new token to the terminal device 601, in response to the received authorization request (procedure 1112).

Next, the user 1100 accesses the storage control unit 801-1 using the browser unit 714 and views a document stored in the storage region 802-1 (procedure 1113). The display unit 715 displays the document on the browser screen.

Next, the user 1100 inputs a usage instruction for instructing to use a remote signature service to the terminal device 601, and the input unit 711 receives the input usage instruction. The control unit 713 transmits a key use request to the server 603, via the communication unit 712 (procedure 1114). The key use request includes the cookie 721 and the identification information of the data storage service to which the user 1100 logs in.

The control unit 912 compares the cookie 721 included in the received key use request with the cookie of the user 1100 registered in the database 921 so as to perform the first identity authentication (procedure 1115). In a case where the cookie 721 included in the key use request and the cookie registered in the database 921 match, the control unit 912 determines that the user 1100 is an authorized user. Then, the control unit 912 transmits a write challenge to the terminal device 601, via the communication unit 911 (procedure 1116).

The write challenge represents an instruction for causing the terminal device 601 to execute write processing. The write processing is processing for writing a file YYY that satisfies a predetermined condition into the cloud storage system 602 using the data storage service indicated by the identification information included in the key use request and notifying the control unit 912 of the file YYY. As the predetermined conditions, a file name, a file size, file content, or the like are designated. The file YYY that satisfies the predetermined conditions is an example of information according to the condition.

The communication unit 712 receives the condition designated by the write challenge by receiving the write challenge, and the control unit 713 generates the file YYY that satisfies the received condition. By generating the file YYY by the control unit 713, it is possible to generate authentication information for the second identity authentication without performing an input operation by the user 1100.

The control unit 713 transmits a sharing setting request to the storage control unit 801-1 of the cloud storage system 602, via the communication unit 712 (procedure 1117). The sharing setting request includes the file YYY and the token of the data storage service to which the user 1100 logs in.

The control unit 713 transmits the sharing setting request so as to instruct the storage control unit 801-1 to notify the control unit 912 of the file YYY. At this time, by using the token of the data storage service to which the user 1100 logs in, it is possible to notify the control unit 912 of the file YYY via the data storage service.

The storage control unit 801-1 stores the file YYY included in the sharing setting request in the storage region 802-1 in response to the received sharing setting request, and makes setting for sharing the file YYY with the electronic signature service. Then, the storage control unit 801-1 notifies the storage control unit 801-2 of start to share the file YYY (procedure 1118), and the storage control unit 801-2 transmits a sharing notification indicating the start to share the file YYY to the server 603 (procedure 1119).

The control unit 912 acquires the file YYY and user information of a creator of the file YYY from the storage control unit 801-1, using the data storage service to which the user 1100 logs in, based on the received sharing notification (procedure 1120). Then, the control unit 912 performs the second identity authentication (procedure 1121). In the second identity authentication, the control unit 912 checks whether or not the acquired file YYY satisfies the condition designated by the write challenge and whether or not the user information of the creator of the file YYY matches user information of the user 1100. The user information is, for example, a user name.

In a case where the file YYY satisfies the condition and the user information of the creator of the file YYY matches the user information of the user 1100, the control unit 912 determines that the user 1100 is an authorized user and transmits the token 722 to the terminal device 601 (procedure 1122). This enables the terminal device 601 to use the electronic signature service using the token 722.

Next, the control unit 713 acquires identification information of the document displayed on the browser screen, from the browser unit 714 (procedure 1123) and acquires the document from the storage control unit 801-1 using the identification information (procedure 1124). Then, the control unit 713 transmits a signature request to the server 603, via the communication unit 712 (procedure 1125). The signature request includes the acquired document and the token 722.

The control unit 912 compares the token 722 included in the received signature request with the token of the user 1100 registered in the database 921. In a case where the token 722 included in the signature request matches the token registered in the database 921, the control unit 912 requests the signature processing unit 913 to execute signature processing on the document included in the signature request (procedure 1126).

The signature processing unit 913 generates an electronic signature for the document by executing the signature processing using the private key 922 (procedure 1127) and outputs the generated electronic signature to the control unit 912. The control unit 912 transmits the electronic signature output from the signature processing unit 913 to the terminal device 601 as a processing result (procedure 1128).

According to information processing in FIGs. 11A and 11B, by using a situation where the user 1100 logs in the data storage service to view or edit the document, it is possible to perform the second identity authentication. In the second identity authentication, since the file YYY indicating the validity of the user 1100 is presented to the server 603 via the data storage service to which the user 1100 logs in, the user 1100 does not need to input additional authentication information such as a one-time password. Therefore, an operation load of the user 1100 is reduced, and convenience of the electronic signature service in the remote signature system is improved.

Since the information processing in FIGs. 11A and 11B achieves both of enhanced authentication and convenience of the electronic signature service, the information processing is suitable for an application for assuring a transmission source of business data.

The two-step identity authentication in the information processing in FIGs. 11A and 11B can be applied to not only the remote signature system but also another information processing system. In this case, instead of the data storage service and the electronic signature service, another service is provided to the user 1100. The another service may be a financial service such as banking or insurances, or may be a service for selling products.

By the way, in a case where the terminal device 601 does not have a token of any data storage service, in the procedure 1116, the control unit 912 may transmit a read challenge, instead of the write challenge, to the terminal device 601.

The read challenge represents an instruction for causing the terminal device 601 to execute read processing. The read processing is processing for reading the token 722 from a file AAA stored in the storage region 802-2 of the cloud storage system 602. The control unit 912 stores the file AAA, in which the token 722 is written, in the storage region 802-2 and performs setting for sharing the file AAA with the user 1100, in advance.

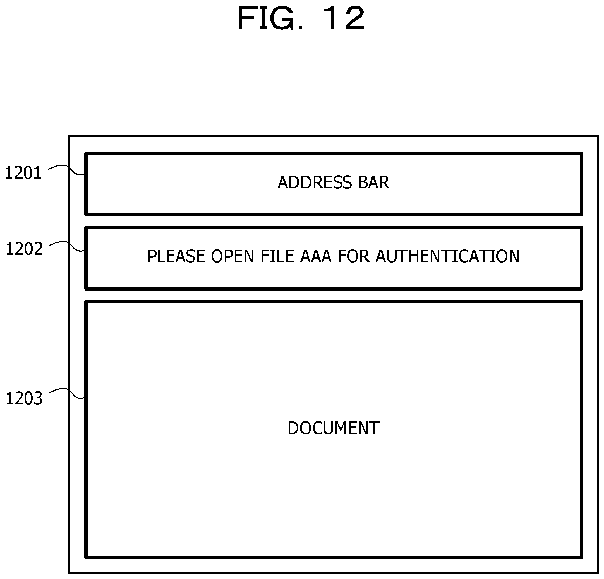

FIG. 12 illustrates an example of a browser screen of the terminal device 601 that has received the read challenge. The browser screen in FIG. 12 includes an address bar 1201, a message region 1202, and a document region 1203. In the document region 1203, a document that the user 1100 is viewing is displayed, and in the address bar 1201, a uniform resource locator (URL) of the document is displayed.

The control unit 713 displays an instruction message "Please open the file AAA for authentication" in the message region 1202, according to the read challenge. The user 1100 opens the file AAA according to the displayed instruction message, and the control unit 713 acquires the token 722 by reading content of the file AAA.

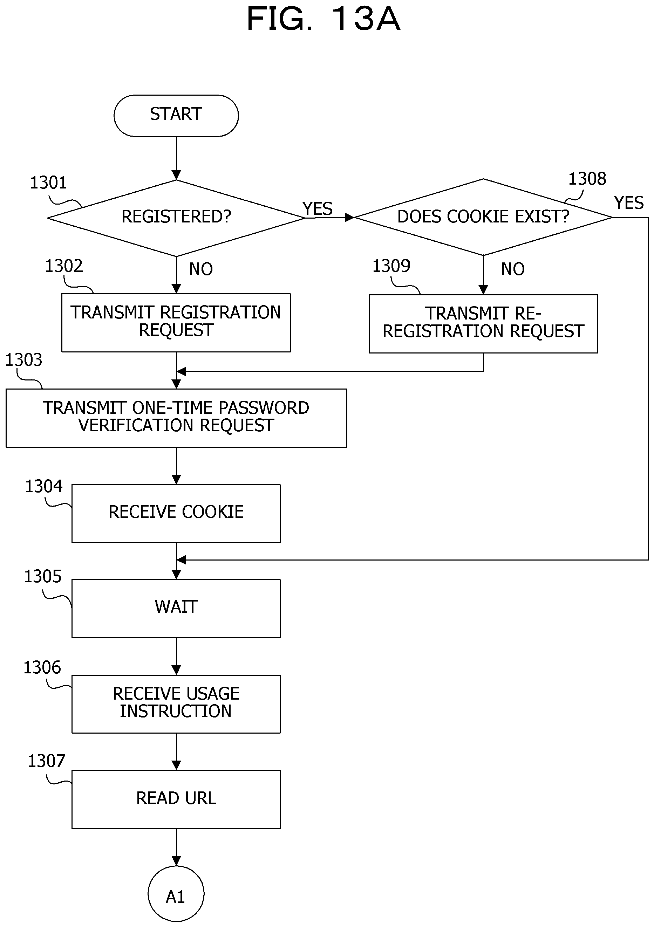

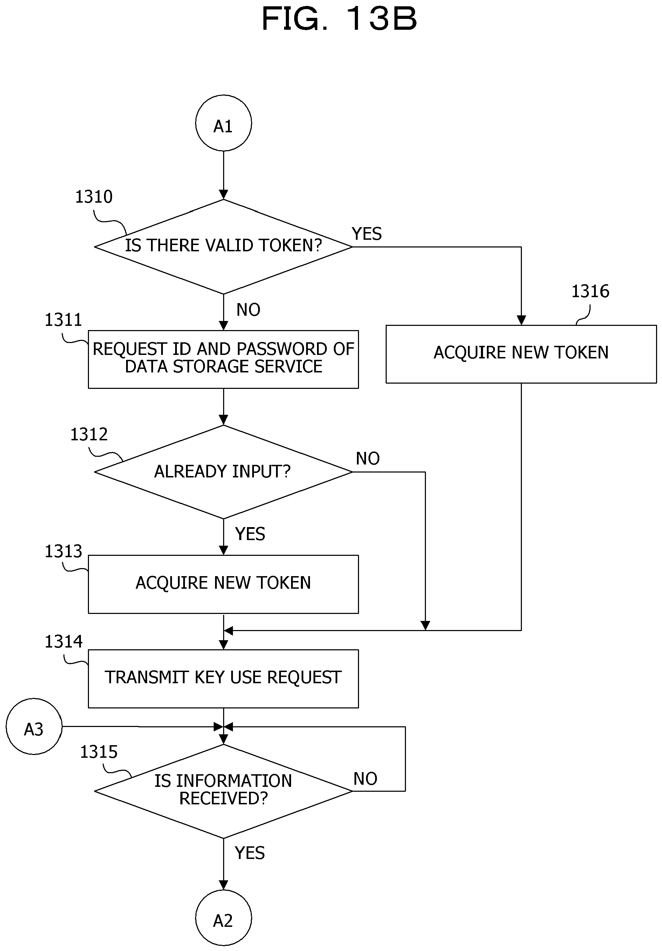

FIGs. 13A to 13C are flowcharts illustrating an example of control processing executed by the terminal device 601 in FIG. 7. In steps 1313 and 1316, the control unit 713 operates as an acquisition unit that acquires the second usage permission information.

First, the control unit 713 checks whether or not the user 1100 is registered in the electronic signature service (step 1301). In a case where the user 1100 is not registered in the electronic signature service (step 1301, NO), the control unit 713 transmits the registration request including the user account of the user 1100 to the server 603 via the communication unit 712 (step 1302).

The server 603 that has received the registration request notifies the mobile terminal device of the user 1100 of the one-time password, and the user 1100 inputs the one-time password to the terminal device 601. Then, the control unit 713 transmits the one-time password verification request including the one-time password and the one or more pieces of identification information of the data storage service to the server 603, via the communication unit 712 (step 1303).

Next, the communication unit 712 receives the cookie 721 from the server 603, and the control unit 713 stores the received cookie 721 in the storage unit 716 (step 1304). Then, the control unit 713 waits until an instruction from the user 1100 is input (step 1305).

In a case where the user 1100 is registered in the electronic signature service (step 1301, YES), the control unit 713 checks whether or not the cookie 721 of the electronic signature service exists in the storage unit 716 (step 1308). In a case where the cookie 721 exists (step 1308, YES), the terminal device 601 executes processing in step 1305 and subsequent steps.

In a case where the cookie 721 does not exist (step 1308, NO), the control unit 713 transmits a re-registration request including the user account of the user 1100 to the server 603, via the communication unit 712 (step 1309). The server 603 that has received the re-registration request notifies the mobile terminal device of the user 1100 of the one-time password. Then, the terminal device 601 executes processing in step 1303 and subsequent steps.

Next, the user 1100 views the document stored in the storage region 802-1 using the browser unit 714, and the display unit 715 displays the document on the browser screen. Then, the user 1100 inputs the usage instruction for instructing to use the remote signature service to the terminal device 601, and the input unit 711 receives the input usage instruction (step 1306).

Next, the control unit 713 reads an URL of the document displayed on the browser screen, from the browser unit 714 (step 1307). Then, the control unit 713 checks whether or not the terminal device 601 has a valid token of a data storage service indicated by the URL (step 1310).

In a case where the terminal device 601 does not have the valid token (step 1310, NO), the control unit 713 requests a user ID and a password of the data storage service to the user 1100 (step 1311). Then, the control unit 713 checks whether or not the user ID and the password are input (step 1312).

In a case where the user ID and the password are input (step 1312, YES), the input unit 711 receives the input user ID and password. Then, the control unit 713 acquires a new token of the data storage service, using the input user ID and password (step 1313).

Next, the control unit 713 transmits the key use request including the cookie 721 and the identification information of the data storage service to which the user 1100 logs in to the server 603, via the communication unit 712 (step 1314).

In a case where the user ID and the password are not input (step 1312, NO), the terminal device 601 executes processing in step 1314 and subsequent steps. In this case, when transmitting the key use request, the control unit 713 notifies the server 603 of that the terminal device 601 does not have a token of any data storage service.

In a case where the terminal device 601 has the valid token (step 1310, YES), the control unit 713 acquires a new token of the data storage service, using the token (step 1316). Then, the terminal device 601 executes processing in step 1314 and subsequent steps.

Next, the control unit 713 checks whether or not information is received from the server 603 (step 1315). In a case where the information is not received from the server 603 (step 1315, NO), the control unit 713 repeats the processing in step 1315.

In a case where the information is received from the server 603 (step 1315, YES), the received information is any one of the write challenge, the read challenge, or the token 722. Then, the control unit 713 checks whether or not the received information is the token 722 (step 1317).

In a case where the received information is the token 722 (step 1317, YES), the control unit 713 acquires identification information of the document displayed on the browser screen from the browser unit 714. Then, the control unit 713 acquires the document from the storage control unit 801-1 using the identification information and the token of the data storage service, and transmits the signature request including the acquired document and the token 722 to the server 603, via the communication unit 712 (step 1321). The communication unit 712 receives the electronic signature generated by the signature processing unit 913 as a processing result (step 1322).

In a case where the received information is not the token 722 (step 1317, NO), the control unit 713 checks whether or not the received information is the write challenge (step 1318).

In a case where the received information is the write challenge (step 1318, YES), the control unit 713 generates the file YYY that satisfies the condition designated by the write challenge (step 1323). Then, the control unit 713 transmits the sharing setting request including the file YYY and the token of the data storage service to the storage control unit 801-1, via the communication unit 712. Next, the terminal device 601 executes processing in step 1315 and subsequent steps.

In a case where the received information is the read challenge (step 1318, NO), the control unit 713 instructs the user 1100 to open the file AAA in the storage region 802-2 designated by the read challenge (step 1319). The user 1100 opens the file AAA according to the instruction, and the control unit 713 acquires the token 722 from the opened file AAA (step 1320).

Next, the control unit 713 acquires the identification information of the document viewed by the user 1100, from the browser unit 714, and the control unit 713 transmits the signature request including the acquired identification information and the token 722 to the server 603, via the communication unit 712 (step 1321). The communication unit 712 receives the electronic signature generated by the signature processing unit 913 as a processing result (step 1322).

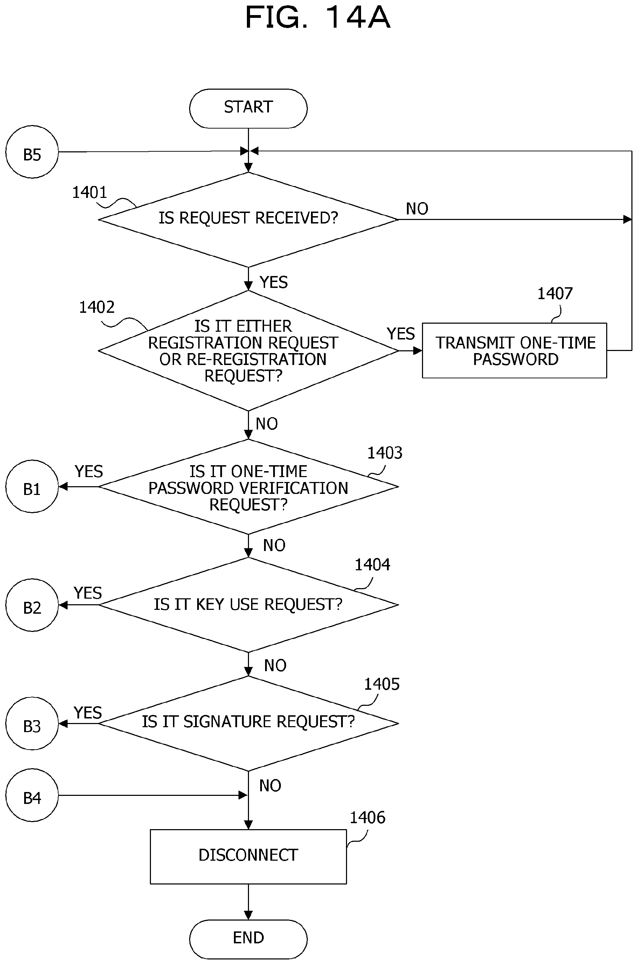

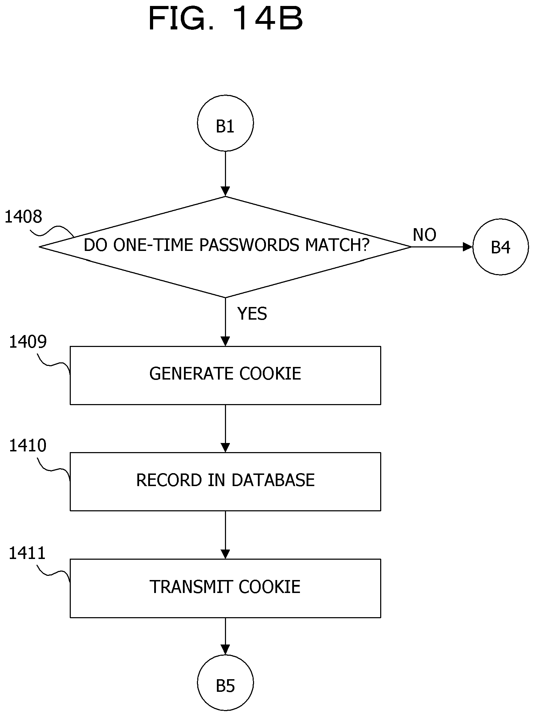

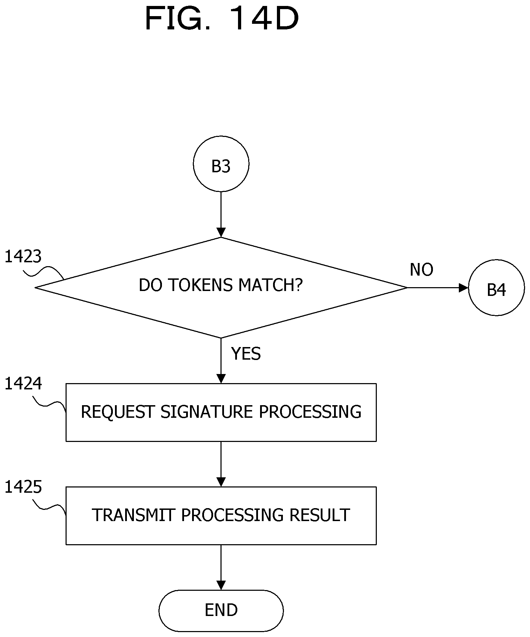

FIGs. 14A to 14D are flowcharts illustrating an example of control processing executed by the server 603 in FIG. 9. First, the control unit 912 checks whether or not a request is received from the terminal device 601 (step 1401). In a case where the request is not received from the terminal device 601 (step 1401, NO), the control unit 912 repeats the processing in step 1401.

In a case where the request is received from the terminal device 601 (step 1401, YES), the control unit 912 checks whether or not the received request is either the registration request or the re-registration request (step 1402).

In a case where the received request is either the registration request or the re-registration request (step 1402, YES), the control unit 912 transmits the one-time password to the mobile terminal device of the user 1100 using a short message or an e-mail (step 1407). Then, the server 603 executes the processing in step 1401 and subsequent steps.

In a case where the received request is neither of the registration request nor the re-registration request (step 1402, NO), the control unit 912 checks whether or not the received request is the one-time password verification request (step 1403). In a case where the received request is not the one-time password verification request (step 1403, NO), the control unit 912 checks whether or not the received request is the key use request (step 1404).

In a case where the received request is not the key use request (step 1404, NO), the control unit 912 checks whether or not the received request is the signature request (step 1405). In a case where the received request is not the signature request (step 1405, NO), the control unit 912 disconnects communication with the terminal device 601 (step 1406).

In a case where the received request is the one-time password verification request (step 1403, YES), the control unit 912 executes processing in step 1408. In step 1408, the control unit 912 compares the one-time password included in the one-time password verification request with the one-time password transmitted to the mobile terminal device of the user 1100.

In a case where the one-time password included in the one-time password verification request does not match the one-time password transmitted to the mobile terminal device of the user 1100 (step 1408, NO), the control unit 912 executes processing in step 1406.

In a case where the one-time password included in the one-time password verification request matches the one-time password transmitted to the mobile terminal device of the user 1100 (step 1408, YES), the control unit 912 executes processing in step 1409. In step 1409, the control unit 912 selects a data storage service used for the identity authentication, from among the data storage services included in the one-time password verification request and generates the cookie 721.

Next, the control unit 912 records identification information of the selected data storage service and the generated cookie 721 in the database 921, in association with the user account of the user 1100 (step 1410). Next, the control unit 912 transmits the cookie 721 to the terminal device 601, via the communication unit 911 (step 1411). Then, the server 603 executes the processing in step 1401 and subsequent steps.

In a case where the received request is the key use request (step 1404, YES), the control unit 912 compares the cookie 721 included in the key use request with the cookie of the user 1100 registered in the database 921 (step 1412).

In a case where the cookie 721 included in the key use request does not match the cookie registered in the database 921 (step 1412, NO), the control unit 912 executes processing in step 1406.

In a case where the cookie 721 included in the key use request matches the cookie registered in the database 921 (step 1412, YES), the control unit 912 determines whether or not there is a risk of an attack on the server 603 (step 1413).

For example, the control unit 912 refers to the authentication success time and the access information of the user 1100 recorded in the database 921 and determines whether or not there is a risk of an attack. In a case of using the authentication success time, the control unit 912 calculates a difference between the current time and the authentication success time recorded in the database 921. Then, in a case where the difference is larger than a threshold, the control unit 912 determines that there is the risk of the attack, and in a case where the difference is equal to or less than the threshold, the control unit 912 determines that there is no risk of the attack.

In a case of using the IP address included in the access information, the control unit 912 calculates a difference between the IP address of the terminal device 601 and the IP address recorded in the database 921. Then, in a case where the difference is larger than a threshold, the control unit 912 determines that there is the risk of the attack, and in a case where the difference is equal to or less than the threshold, the control unit 912 determines that there is no risk of the attack.

In a case of using the latitude and the longitude included in the access information, the control unit 912 calculates a distance between a current position of the terminal device 601 and a position indicated by the latitude and the longitude recorded in the database 921. Then, in a case where the distance is larger than the threshold, the control unit 912 determines that there is the risk of the attack, and in a case where the distance is equal to or less than the threshold, the control unit 912 determines that there is no risk of the attack.

In a case where there is a risk (step 1413, YES), the control unit 912 selects the write challenge or the read challenge (step 1414). In a case of being notified from the terminal device 601 that the terminal device 601 does not have a token of any data storage service, the control unit 912 selects the read challenge, and selects the write challenge otherwise.

Next, the control unit 912 checks whether or not the write challenge is selected (step 1415). In a case where the write challenge is selected (step 1415, YES), the control unit 912 transmits the write challenge to the terminal device 601, via the communication unit 911 (step 1416).

Then, the control unit 912 checks whether or not the sharing notification indicating the start to share the file YYY is received from the storage control unit 801-2 (step 1417). In a case where the sharing notification is not received (step 1417, NO), the control unit 912 repeats the processing in step 1417.

In a case of receiving the sharing notification (step 1417, YES), the control unit 912 acquires the file YYY and the user information of the creator of the file YYY, from the storage control unit 801-1, based on the received sharing notification. Then, the control unit 912 checks whether or not the acquired file YYY satisfies the condition designated by the write challenge (step 1418-1). In a case where the file YYY does not satisfy the condition (step 1418-1, NO), the control unit 912 executes processing in step 1406.

In a case where the file YYY satisfies the condition (step 1418-1, YES), the control unit 912 checks whether or not the user information of the creator of the file YYY matches the user information of the user 1100 (step 1418-2). In a case where the user information of the creator of the file YYY does not match the user information of the user 1100 (step 1418-2, NO), the control unit 912 executes processing in step 1406.

In a case where the user information of the creator of the file YYY matches the user information of the user 1100 (step 1418-2, YES), the control unit 912 generates the token 722. Then, the control unit 912 records the generated token 722 in the database 921 in association with the user account of the user 1100, and transmits the token 722 to the terminal device 601 via the communication unit 911 (step 1419). Next, the server 603 executes processing in step 1401 and subsequent steps.

In a case where the read challenge is selected (step 1415, NO), the control unit 912 generates the token 722 and records the generated token 722 in the database 921, in association with the user account of the user 1100 (step 1420). Next, the control unit 912 generates the file AAA in which the token 722 is written (step 1421). Then, the control unit 912 stores the file AAA in the storage region 802-2 via the communication unit 911 and performs setting for sharing the file AAA with the user 1100.

Next, the control unit 912 transmits the read challenge to the terminal device 601, via the communication unit 911 (step 1422). Then, the server 603 executes the processing in step 1401 and subsequent steps.

In a case where the received request is the signature request (step 1405, YES), the control unit 912 compares the token 722 included in the signature request with the token of the user 1100 registered in the database 921 (step 1423). In a case where the token 722 included in the signature request does not match the token registered in the database 921 (step 1423, NO), the control unit 912 executes the processing in step 1406.

In a case where the token 722 included in the signature request matches the token registered in the database 921 (step 1423, YES), the control unit 912 requests the signature processing unit 913 to execute the signature processing on the document indicated by the signature request (step 1424). Then, the control unit 912 transmits the electronic signature output from the signature processing unit 913 to the terminal device 601 as a processing result (step 1425).

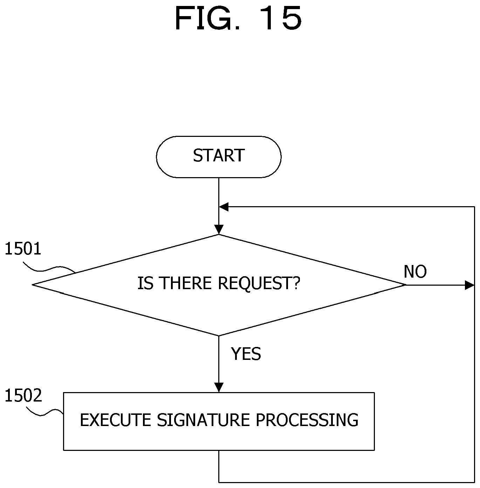

FIG. 15 is a flowchart illustrating an example of electronic signature control processing executed by the signature processing unit 913 in FIG. 9. First, the signature processing unit 913 checks whether or not the request of the signature processing is caused from the control unit 912 (step 1501). In a case where the request of the signature processing is not caused (step 1501, NO), the signature processing unit 913 repeats the processing in step 1501.

In a case where the request of the signature processing is caused (step 1501, YES), the signature processing unit 913 executes the signature processing (step 1502). In a case where a document is included in the signature request received from the terminal device 601, the signature processing unit 913 executes signature processing on the document. In a case where identification information of the document is included in the signature request, the signature processing unit 913 acquires the document from the cloud storage system 602, using the identification information, and executes the signature processing on the acquired document.

In the signature processing, the signature processing unit 913 generates an electronic signature for the document using the private key 922, and outputs the generated electronic signature to the control unit 912. Then, the signature processing unit 913 repeats the processing in step 1501 and subsequent steps.

By the way, the server that provides the electronic signature service may be shared by a plurality of corporations, or a server different for each region may be provided. The region where the server is provided is, for example, the European Union (EU), Japan, or the like.

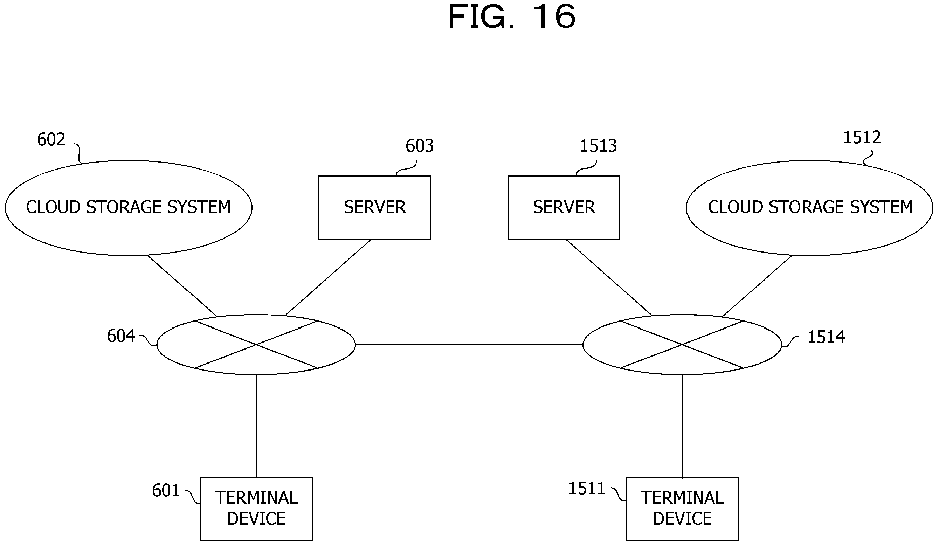

FIG. 16 illustrates a configuration example of an information processing system including two servers that provide electronic signature services. The information processing system in FIG. 16 includes the terminal device 601, the cloud storage system 602, the server 603, a terminal device 1511, a cloud storage system 1512, and a server 1513.

The terminal device 1511 has a configuration similar to that of the terminal device 601 in FIG. 7, the cloud storage system 1512 has a configuration similar to that of the cloud storage system 602 in FIG. 8, and the server 1513 has a configuration similar to that of the server 603 in FIG. 9.

The terminal device 601, the cloud storage system 602, and the server 603 are provided in a first region, and communicate with each other via the communication network 604. The terminal device 1511, the cloud storage system 1512, and the server 1513 are provided in a second region, and communicate with each other via a communication network 1514. The communication network 604 is an example of a first communication network, and the communication network 1514 is an example of a second communication network.

The server 603 and the server 1513 provide the electronic signature services, and the cloud storage system 602 and the cloud storage system 1512 provide the data storage services. The server 1513 is an example of a third device.

The server 603 and the server 1513 share the user information, the database 921, and the private key 922 using a blockchain or the like. In a case where the terminal device 601 in the first region requests the electronic signature service to the server 1513 in the second region via the communication network 604 and the communication network 1514, the server 1513 requests the two-step identity authentication to the server 603. As a result, a user of the terminal device 601 can use functions of the server 1513 without new burdens.

In this case, the input unit 711 of the terminal device 601 receives a usage instruction for instructing to use the electronic signature service provided by the server 1513, from the user 1100. In a case where the user 1100 is logged in the data storage service of the cloud storage system 602 when receiving the usage instruction, the notification unit 712 transmits the key use request to the server 1513 via the communication network 604 and the communication network 1514. The key use request includes a cookie and identification information of the data storage service to which the user 1100 logs in.

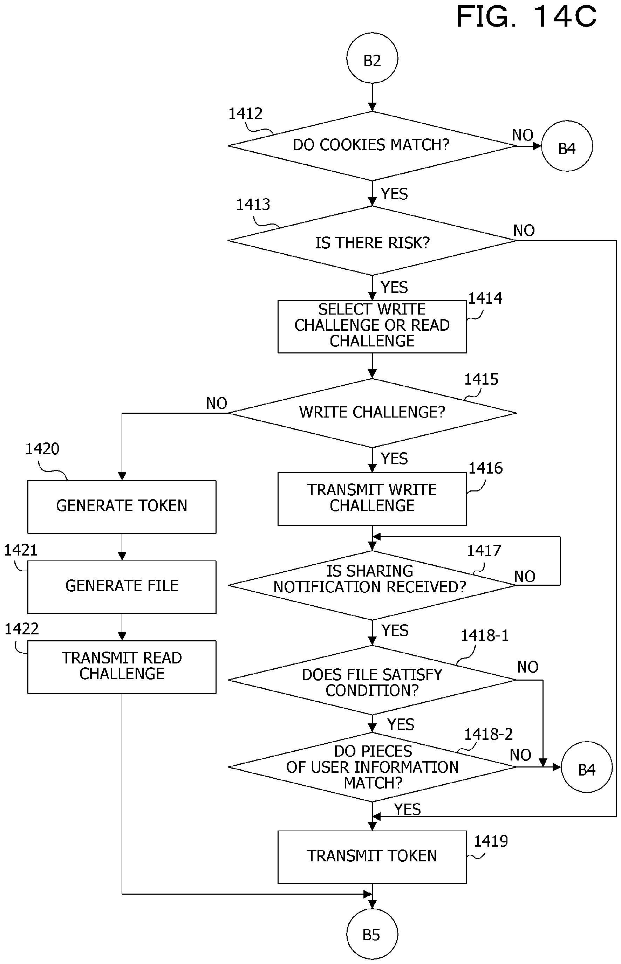

The server 1513 receives the key use request from the terminal device 601 and notifies the server 603 of the received key use request. The server 603 executes processing in step 1412 and subsequent steps in FIG. 14C, based on the notification of the key use request. In step 1414, in a case where the write challenge is selected, the terminal device 601, the cloud storage system 602, and the server 603 execute processing similar to the procedures 1116 to 1128 in FIG. 11B.

The configurations of the electronic signature system in FIG. 1 and the remote signature systems in FIGs. 2 and 3 are merely examples, and some components may be omitted or changed according to the application or the condition of the electronic signature system or the remote signature system.

The configuration of the information processing device 401 in FIG. 4 is merely an example, and some components may be omitted or changed according to the application or the condition of the information processing device 401. The configurations of the information processing system in FIGs. 6 and 16 are merely examples, and some components may be omitted or changed according to the application or the condition of the information processing system. The configurations of the terminal device 601 in FIG. 7, the cloud storage system 602 in FIG. 8, and the server 603 in FIG. 9 are merely examples, and some components may be omitted or changed according to the application or the condition of the information processing system.

The sequences in FIGs. 11A and 11B are merely examples, and some procedures may be omitted or changed according to the configuration or the condition of the information processing system. The flowcharts in FIGs. 5, 13A to 13C, 14A to 14D, and 15 are merely examples, and a part of the processing may be omitted or changed according to the configuration or the condition of the information processing device 401 or the information processing system.

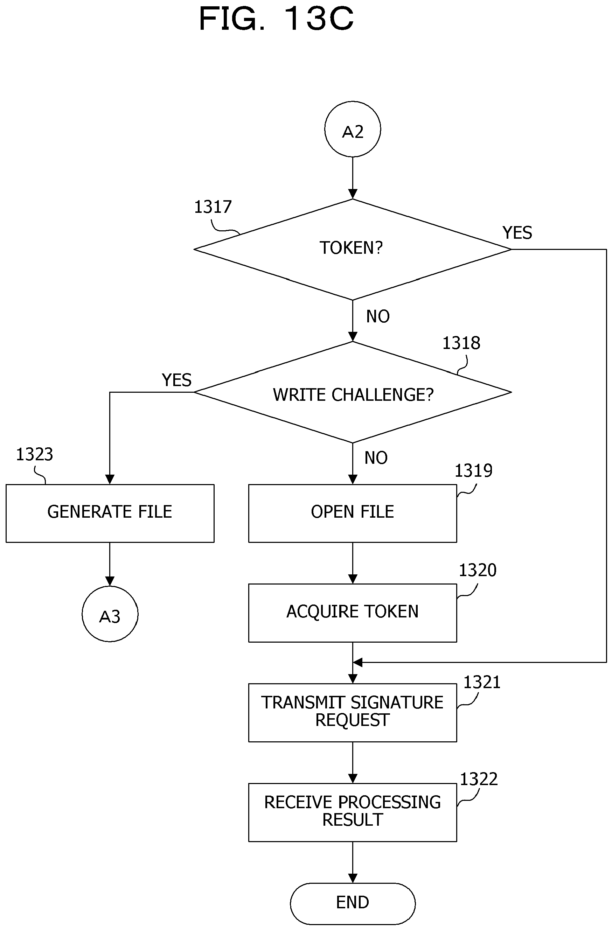

For example, in a case where it is not necessary to determine whether or not there is a risk of an attack on the server 603, the processing in step 1413 in FIG. 14C can be omitted. In a case where the read challenge is not used, the processing in steps 1318 to 1320 in FIG. 13C can be omitted. In this case, the processing in steps 1414, 1415 and 1420 to 1422 in FIG. 14C can be also omitted.

The database illustrated in FIG. 10 is merely an example, and some items may be omitted or changed according to the configuration or the condition of the information processing system. For example, in a case where it is not necessary to determine whether or not there is a risk of an attack on the server 603, the authentication success time and the access information can be omitted. The browser screen illustrated in FIG. 12 is merely an example, and a browser screen in another form may be used.

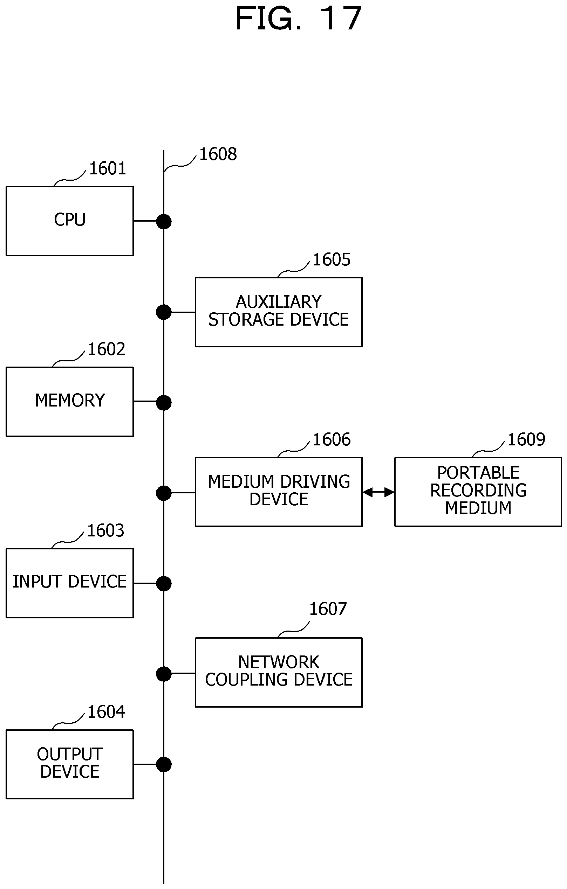

FIG. 17 illustrates a hardware configuration example of an information processing device used as the information processing device 401 in FIG. 4, the terminal device 601 in FIG. 7, and the server 603 in FIG. 9. The information processing device in FIG. 17 includes a central processing unit (CPU) 1601, a memory 1602, an input device 1603, an output device 1604, an auxiliary storage device 1605, a medium driving device 1606, and a network coupling device 1607. These components are hardware and are coupled to each other by a bus 1608.

The memory 1602 is, for example, a semiconductor memory such as a read only memory (ROM), a random access memory (RAM), or a flash memory, and stores programs and data used for processing. The memory 1602 may operate as the storage unit 716 in FIG. 7 or the storage unit 914 in FIG. 9.

The CPU 1601 (processor) operates as the notification unit 413 and the instruction unit 414 in FIG. 4, for example, by executing a program using the memory 1602. The CPU 1601 also operates as the control unit 713 and the browser unit 714 in FIG. 7, by executing a program using the memory 1602. The CPU 1601 also operates as the control unit 912 and the signature processing unit 913 in FIG. 9, by executing a program using the memory 1602.

The input device 1603 is, for example, a keyboard, a pointing device, or the like and is used for inputting an instruction or information from an operator or a user. The output device 1604 is, for example, a display device, a printer, a speaker, or the like and is used to inquire of an operator or a user or to output a processing result. The input device 1603 may operate as the input unit 711 in FIG. 7. The output device 1604 may operate as the display unit 715 in FIG. 7. The processing result may be a browser screen.

For example, the auxiliary storage device 1605 is a magnetic disk device, an optical disk device, a magneto-optical disk device, a tape device, or the like. The auxiliary storage device 1605 may be a flash memory or a hard disk drive. The information processing device can store programs and data in the auxiliary storage device 1605 and load these programs and data into the memory 1602 to use. The auxiliary storage device 1605 may operate as the storage unit 716 in FIG. 7 or the storage unit 914 in FIG. 9.

The medium driving device 1606 drives a portable recording medium 1609 and accesses recorded content of the portable recording medium 1609. The portable recording medium 1609 is a memory device, a flexible disk, an optical disk, a magneto-optical disk, or the like. The portable recording medium 1609 may be a compact disk read only memory (CD-ROM), a digital versatile disk (DVD), a universal serial bus (USB) memory, or the like. The operator or the user can store programs and data in the portable recording medium 1609 and load these programs and data into the memory 1602 to use.

As described above, a computer-readable recording medium in which the programs and data used for processes are stored is a physical (non-transitory) recording medium such as the memory 1602, the auxiliary storage device 1605, or the portable recording medium 1609.

The network coupling device 1607 is a communication interface circuit that is coupled to the communication network 604 in FIG. 6 and performs data conversion associated with communication. The information processing device can receive programs and data from an external device via the network coupling device 1607 and load these programs and data into the memory 1602 to use. The network coupling device 1607 may operate as the communication unit 712 in FIG. 7 or the communication unit 911 in FIG. 9.

Note that, it is not necessary for the information processing device to include all the components in FIG. 17 and some components may be omitted according to the application or the condition. For example, in a case where the information processing device does not use the portable recording medium 1609, the medium driving device 1606 may be omitted.

As the server included in the cloud storage system 602 in FIG. 8, an information processing device similar to that in FIG. 17 can be used.

While the disclosed embodiment and the advantages thereof have been described in detail, those skilled in the art will be able to make various modifications, additions, and omissions without departing from the scope of the present invention as explicitly set forth in the claims.

### CITATION LIST

### PATENT DOCUMENT

Patent Document 1: Japanese Patent No. 6104439

### NON-PATENT DOCUMENT

Non-Patent Document 1: Ministry of Internal Affairs and Communications, "Efforts related to Trust Service", [online], White Paper on Information and Communications 2018 [retrieved on September 11, 2020], the Internet <URL:https://www.soumu.go.jp/johotsusintokei/whitepaper/ja/r01/html/nd2452 50.html>

### REFERENCE SIGNS LIST

- 101: CERTIFICATION AUTHORITY (CA)
- 102: CLOUD STORAGE SYSTEM
- 103: TERMINAL DEVICE
- 104: IC CARD
- 111: SENDER
- 112: RECIPIENT
- 121: PLUG-IN PROGRAM
- 122: CERTIFICATE
- 123: DATA
- 124: PRIVATE KEY
- 125: ELECTRONIC SIGNATURE
- 201: SERVER
- 211: PROGRAM
- 401: INFORMATION PROCESSING DEVICE
- 411: FIRST RECEPTION UNIT
- 412: SECOND RECEPTION UNIT
- 413: NOTIFICATION UNIT
- 414: INSTRUCTION UNIT
- 601: TERMINAL DEVICE
- 602: CLOUD STORAGE SYSTEM
- 603: SERVER
- 711: INPUT UNIT
- 712: COMMUNICATION UNIT
- 713: CONTROL UNIT
- 714: BROWSER UNIT
- 715: DISPLAY UNIT
- 716: STORAGE UNIT
- 721: COOKIE
- 722: TOKEN
- 801-1: STORAGE CONTROL UNIT
- 801-2: STORAGE CONTROL UNIT
- 802-1: STORAGE REGION
- 802-2: STORAGE REGION
- 911: COMMUNICATION UNIT
- 912: CONTROL UNIT
- 913: SIGNATURE PROCESSING UNIT
- 914: STORAGE UNIT
- 921: DATABASE
- 922: PRIVATE KEY
- 1511: TERMINAL DEVICE
- 1512: CLOUD STORAGE SYSTEM
- 1513: SERVER
- 1602: MEMORY
- 1603: INPUT DEVICE
- 1604: OUTPUT DEVICE
- 1605: AUXILIARY STORAGE DEVICE
- 1606: MEDIUM DRIVING DEVICE
- 1607: NETWORK COUPLING DEVICE
- 1609: PORTABLE RECORDING MEDIUM

## Claims

1. A control method implemented by a computer, the control method comprising:
receiving, from a user, a usage instruction that instructs to use a first service;
notifying first processing that provides the first service of identification information of a second service to which the user is logged in when the usage instruction is received;
receiving a condition from the first processing according to the notification of the identification information; and
instructing second processing that provides the second service to notify the first processing of information according to the condition.

2. The control method according to claim 1, further comprising:
receiving, from the first processing, first usage permission information that permits to use the first service, in response to the instruction to the second processing; and
using the first service by using the first usage permission information.

3. The control method according to claim 2, further comprising:
acquiring, from the second processing, second usage permission information that permits to use the second service, after receiving the usage instruction from the user, wherein
the processing of instructing to notify the first processing of the information according to the condition includes processing of instructing the second processing to notify the first processing of the information according to the condition by using the second usage permission information.

4. The control method according to claim 2 or 3, wherein the processing of instructing to notify the first processing of the information according to the condition includes processing of generating the information according to the condition and processing of transmitting the information according to the condition to the second processing.

5. The control method according to any one of claims 2 to 4, wherein
the second service is a service that stores data,
the first service is a service that generates an electronic signature of the user for the data; and
the processing of using the first service includes processing of acquiring the data and processing of transmitting the data to the first processing.

6. An information processing apparatus comprising:
a first reception unit of receiving, from a user, a usage instruction that instructs to use a first service;
a notification unit of notifying first processing that provides the first service of identification information of a second service to which the user is logged in when the usage instruction is received;
a second reception unit of receiving a condition from the first processing according to the notification of the identification information; and
an instruction unit of instructing second processing that provides the second service to notify the first processing of information according to the condition.

7. The information processing apparatus according to claim 6, wherein
the second reception unit receives, from the first processing, first usage permission information that permits to use the first service, in response to the instruction to the second processing; and
the information processing apparatus further comprises: a processing unit of using the first service by using the first usage permission information.

8. The information processing apparatus according to claim 7, further comprising:
an acquisition unit of acquiring, from the second processing, second usage permission information that permits to use the second service, after receiving the usage instruction from the user, wherein
the instruction unit is configured to instruct the second processing to notify the first processing of the information according to the condition by using the second usage permission information.

9. An information processing system comprising: an information processing device; a first device that provides a first service; and a second device that provides a second service, wherein
the information processing device includes
a first reception unit that receives, from a user, a usage instruction that instructs to use the first service,
a notification unit that notifies the first device of identification information of the second service in a case where the user is logged in the second service when the usage instruction is received,
a second reception unit that receives a condition from the first device according to the notification of the identification information, and
an instruction unit that instructs the second device to notify the first device of information according to the condition,
the first device receives the notification of the identification information from the information processing device, notifies the information processing device of the condition based on the notification of the identification information, and receives a notification of the information according to the condition from the second device, and
the second device notifies the first device of the information according to the condition, based on the instruction to the second device.

10. The information processing system according to claim 9, wherein
the second reception unit receives, from the first device, first usage permission information that permits to use the first service, in response to the instruction to the second device, and
the information processing device uses the first service by using the first usage permission information.

11. The information processing system according to claim 10, wherein
after receiving the usage instruction from the user, the information processing device acquires, from the second device, second usage permission information that permits to use the second service, and
the instruction unit instructs the second device to notify the first device of the information according to the condition, by using the second usage permission information.

12. The information processing system according to claim 9, wherein the first device acquires user information from the second device, checks whether or not the information according to the condition satisfies the condition, checks whether or not the user information acquired from the second device matches user information of the user, and in a case where the information according to the condition satisfies the condition and the user information acquired from the second device matches the user information of the user, transmits first usage permission information that permits to use the first service to the information processing device.

13. The information processing system according to any one of claims 9 to 12, further comprising
a third device, wherein
the information processing device, the first device, and the second device communicate with each other via a first communication network,
the third device provides the first service via a second communication network,
the first reception unit receives, from a user, another usage instruction that instructs to use the first service provided by the third device,
in a case where the user is logged in the second service when the another usage instruction is received, the notification unit notifies the third device of the identification information of the second service via the first communication network and the second communication network,
the third device receives the notification of the identification information from the information processing device and notifies the first device of the identification information,
the first device notifies the information processing device of another condition based on the notification of the identification information,
the second reception unit receives the another condition from the first device,
the instruction unit instructs the second device to notify the first device of information according to the another condition,
the second device notifies the first device of the information according to the another condition, and
the first device receives the notification of the information according to the another condition from the second device.

14. A control program for causing a computer to execute processing comprising:
receiving, from a user, a usage instruction that instructs to use a first service;
notifying first processing that provides the first service of identification information of a second service to which the user is logged in when the usage instruction is received;
receiving a condition from the first processing according to the notification of the identification information; and
instructing second processing that provides the second service to notify the first processing of information according to the condition.

15. The control program according to claim 14, for causing the computer to execute processing further comprising:
receiving, from the first processing, first usage permission information that permits to use the first service, in response to the instruction to the second processing; and
using the first service by using the first usage permission information.

16. The control program according to claim 15, for causing the computer to execute processing further comprising:
acquiring, from the second processing, second usage permission information that permits to use the second service, after receiving the usage instruction from the user, wherein
the processing of instructing to notify the first processing of the information according to the condition includes processing of instructing the second processing to notify the first processing of the information according to the condition by using the second usage permission information.
